# EUROPEAN PATENT APPLICATION

(11) **EP 2 642 699 A1**
(43) Date of publication of application: **25.09.2013**
(21) Application number: 10859681.8
(22) Date of filing: 16.11.2010
(51) Int. Cl.: H04L 12/44

(54) **METHOD OF CONTROLLING COMMUNICATION SYSTEM, COMMUNICATION SYSTEM, COMMUNICATION DEVICE**

(71) Applicant: Fujitsu Limited, Kawasaki-shi, Kanagawa 211-8588 (JP)
(72) Inventor: KUROKAWA, Kazushige, Kawasaki-shi Kanagawa 211-8588 (JP)
(74) Representative: HOFFMANN EITLE
(86) International application number: PCT/JP2010/070331
(87) International publication number: WO 2012/066625

(57) **Abstract**

A first network switching apparatus 1 links down at least one of a plurality of first ports 12 by cutting off the power supply to at least one of the first ports 12 according to the available bandwidth information of a LAG 5. Subsequently, the first network switching apparatus 1 transmits a link-down completion notice to a second network switching apparatus 2. The second network switching apparatus 2 that has received the link-down completion notice cuts off the power supply to at least one of a plurality of second ports 22 that is linked down.

## Description

### Technical Field

The present invention relates to a method for controlling a communication system, a communication system, and a communication apparatus.

### Background Art

In networking, a link aggregation function is known in which communication may be performed at the communication rate with which the communication rate of the bundled physical links is combined by virtually bundling a plurality of physical links as one link (link aggregation group). The link aggregation function is one of the Ethernet (registered trademark) functions, and is defined in IEEE (The Institute of Electrical and Electronics Engineers, Inc.) 802.3ad. As a similar function, a trunking function is also known in which communication may be performed at the communication rate with which the communication rate of the bundled physical ports is combined by virtually bundling a plurality of physical ports as one port in fiber channels.

Moreover, a method for making link aggregation redundant has been proposed in which links are made redundant by using spare links in the communication among network relay devices. In the method for making link aggregation redundant, a link aggregation group is created by using two or more specified links as operational links, and specified links are blocked and made to be pseudo-spare links; the state of the operational links in a link aggregation group is monitored; when a portion of the operational links reaches an unusable state, the portion of the operational links in an unusable state is detached from the link aggregation group, and the pseudo-closed state of the spare links is released; and the spare links are attached to the link aggregation group as operational links.

Further, a radio base station apparatus having a plurality of radio units has been proposed in which a data amount detection unit compares the amount of upstream data, which is the amount of communication data from radio terminals to the radio units, with the amount of downstream data, which is the amount of communication data from the radio units to the radio terminals. In the radio base station apparatus, when the amount of upstream data is greater than the amount of downstream data, a controller controls a power source controller to terminate the power supply to the transmitter of one of the radio units; when the amount of downstream data is greater than the amount of upstream data, the controller controls the power source controller to terminate the power supply to the receiver of one of the radio units; and when both the amount of upstream data and the amount of downstream data is smaller than a specified threshold, the controller controls the power source controller to terminate the power supply to both the transmitter and receiver of one of the radio units.

### [Citation List]

### [Patent Document]

[Patent Document 1] Japanese Laid-open Patent Publication No. 2004-349764
[Patent Document 2] Japanese Laid-open Patent Publication No. 2008-252282

### Summary of Invention

In link aggregation, a virtually bundled link aggregation group involves redundancy for available bandwidth. For this reason, it is inevitable that there be a period of time during which the available bandwidth secured by the link aggregation group is redundant with reference to the band required for communication. Under these circumstances, it is desired that the power consumption used for performing communication be reduced while maintaining a redundancy in the link aggregation group.

Accordingly, it is an object in one aspect of the present invention to provide a method for controlling a communication system where the power consumption may be reduced in the communication using a link aggregation group.

A method for controlling a communication system disclosed herein uses a plurality of links that connect a plurality of first ports of a first communication apparatus with a plurality of second ports of a second communication apparatus, as one virtual link that is a link aggregation group, to perform communication between the first communication apparatus and the second communication apparatus. The method for controlling a communication system includes: linking down, by using the first communication apparatus, at least one of the plurality of first ports by cutting off a power supply to at least one of the plurality of first ports according to available bandwidth information of the link aggregation group; transmitting, by using the first communication apparatus, a link-down completion notice to the second communication apparatus after the linking down; and cutting off, by using the second communication apparatus that has received the link-down completion notice, a power supply to at least one of the plurality of second ports that is linked down.

According to a method for controlling a communication system disclosed herein, it becomes possible to reduce the power consumption in the communication where a link aggregation group is used by terminating the power supply to the linked-down ports at both ends of a link in a link aggregation group.

### Brief Description of Drawings

FIG. 1 illustrates an example of the communication system including network switching apparatuses according to an embodiment.
FIG. 2 illustrates an example of the configuration of a network switching apparatus.
FIG. 3 illustrates an example of the configuration of a link aggregation controller.
FIG. 4 depicts an example of the LAG management table.
FIG. 5 depicts an example of the port state management table.
FIG. 6 depicts examples of the LA-ECO frame.
FIG. 7A is a flow of a link aggregation monitoring process (1).
FIG. 7B is a flow of a link aggregation monitoring process (2).
FIG. 8 is a flowchart of a port adding process.
FIG. 9 is a flowchart of a port deleting process.
FIG. 10 illustrates the flowchart of an ECO frame reception process.
FIG. 11 is the flowchart of a link updating process.
FIG. 12 is an explanatory schematic diagram of a link deleting process.
FIG. 13 is an explanatory schematic diagram of a link adding process.

### Preferred Embodiments

Hereinafter, an example of the embodiment of a method for controlling a communication system, a communication system, and a communication apparatus will be described.

Generally, as long as a power is provided, a PHY module (Physical layer module), which is implemented at ports of a network switching apparatus and is defined by the first layer of the OSI reference model in which the communication functions of a network device or the like are defined by using a hierarchical structure, consumes a certain amount of power regardless of whether communication is actually being performed. Accordingly, when the available bandwidth secured by a link aggregation group is excessive, the PHY module of a linked-up port consumes power even though the PHY module does not perform any communication.

However, if the power supply to a linked-up port is cut in a link aggregation group, a link error due to the termination of an established link is output. Thus, the power cut is dealt with as a hardware failure or abnormality in a transmission line. For this reason, it is not possible to cut the power supply to a linked-up port in a link aggregation group.

As discussed above, at ports where links are established, it is necessary to turn on the power source of the PHY module at all times such that the established link will be maintained. Accordingly, when the available bandwidth secured by a link aggregation group is excessive, the power consumption at PHY modules of the ports at both ends of the link is wasted.

It may be an option to delete the links from a link aggregation group when the available bandwidth secured by a link aggregation group is excessive, and to add links to a link aggregation group when there is insufficient available bandwidth.

However, even if links are deleted from a link aggregation group, the power consumption will not be reduced unless the power supply to PHY modules of the ports at both ends of the link is cut. In other words, an excess of available bandwidth may be reduced by deleting links from one link aggregation group, but it is not possible to reduce the power consumption. In reality, it is not possible to cut the power supply to a linked-up port in a link aggregation group, as described above.

According to a method for controlling a communication system, a communication system, and a communication apparatus disclosed herein, it becomes possible to reduce the power consumption in a communication apparatus by terminating the power supply to the linked-down ports at both ends of a link in a link aggregation group, while maintaining the redundancy in a link aggregation group.

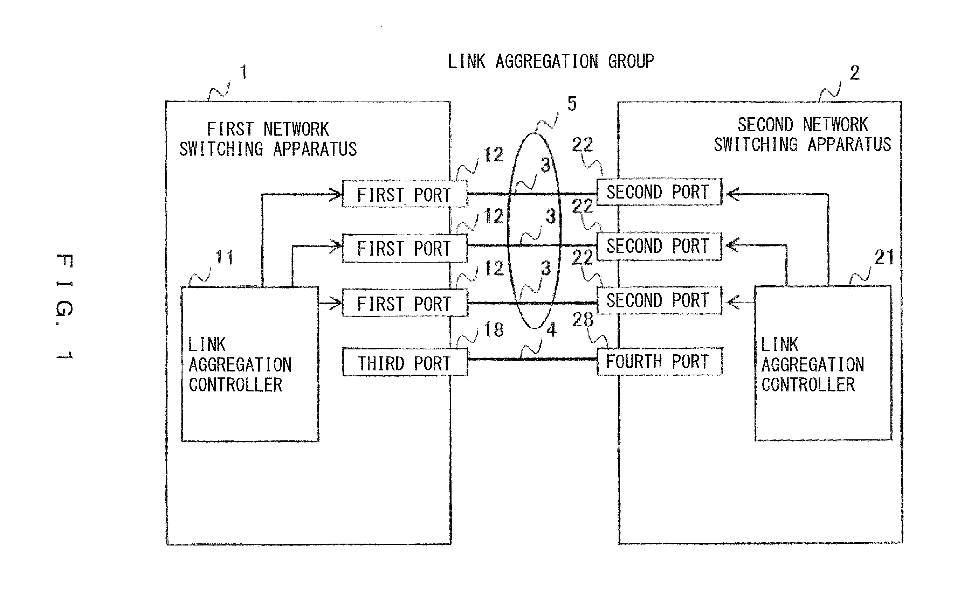

FIG. 1 illustrates an example of the communication system including network switching apparatuses.

The communication system includes a first network switching apparatus 1 as a communication apparatus, a second network switching apparatus 2 as a communication apparatus, and a plurality of links 3 and 4 that connect the first network switching apparatus 1 to the second network switching apparatus 2. The first network switching apparatus 1 is a network relay device for relaying frames, and includes a link aggregation controller 11, a plurality of first ports 12, and a third port 18. The second network switching apparatus 2 is a network relay device for relaying frames, and includes a link aggregation controller 21, a plurality of second ports 22, and a fourth port 28.

The first ports 12 are connected to the second ports 22, respectively, through the links 3. The links 3 are, for example, transmission paths such as cables or optical fibers. The numbers of the first ports 12 and the second ports 22 are not limited to "3".

The communication system uses a LAG 5 to perform communication between the first network switching apparatus 1 and the second network switching apparatus 2. In the following description, the term "link aggregation group" will be referred to as "LAG". The LAG 5 is a unit of links in the communication by the link aggregation. The LAG 5 is one virtual link including a plurality of links 3 that connect the first ports 12 of the first network switching apparatus 1 to the second ports 22 of the second network switching apparatus 2.

The communication in which the LAG 5 is used is controlled by the link aggregation controller 11 and the link aggregation controller 21. The communication in which the LAG 5 is used is performed, for example, in accordance with the link aggregation control protocol (LACP). The link aggregation control protocol is defined, for example, by IEEE 802.3ad. In other words, the link aggregation controller 11 and the link aggregation controller 21 control the LAG 5 in accordance with the link aggregation control protocol, and the communication in which the LAG 5 is used is performed.

The third port 18 is included in the first network switching apparatus 1, and is not a port other than the first ports 12. The third port 18 does not belong to the LAG 5 that connects the first ports 12 with the second ports 22.

The fourth port 28 is included in the second network switching apparatus 2, and is not a port other than the second ports 22. The fourth port 28 does not belong to the LAG 5 that connects the first ports 12 with the second ports 22.

The third port 18 is connected with the fourth port 28 through a link 4. The link 4 is a transmission path such as a cable or optical fiber. The number of the third ports 18 and the number of the fourth ports 28 is not limited to "1", and may be plural. When a plurality of third ports 18 and a plurality of fourth ports 28 are provided, a plurality of links that connect between the third ports 18 and the fourth port 28 may be used as a link aggregation group other than the LAG 5 to which the first ports 12 and the seconds ports 22 belong.

The third port 18 may be connected with a communication apparatus other than the second network switching apparatus 2. The fourth port 28 may be connected with a communication apparatus other than the first network switching apparatus 1.

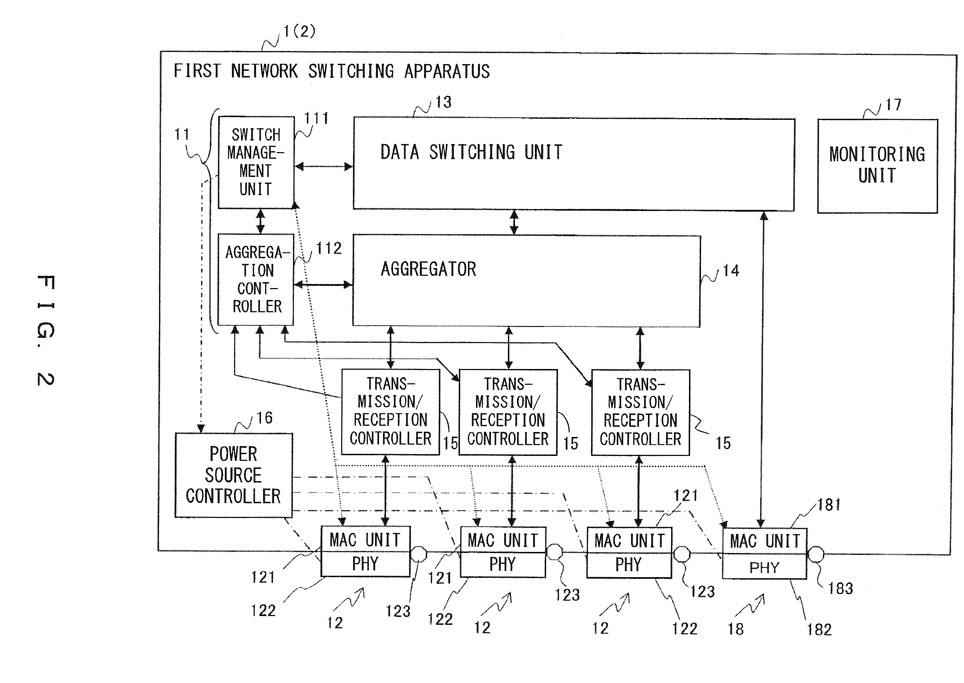

FIG. 2 illustrates an example of the configuration of a network switching apparatus.

The first network switching apparatus 1 includes a data switching unit 13, an aggregator 14, a transmission/reception controller 15, a power source controller 16, and a monitoring unit 17, in addition to the link aggregation controller 11, the first ports 12, and the third port 18. The link aggregation controller 11 includes a switch management unit 111 and an aggregation controller 112. Each of the first ports 12 includes a MAC unit 121, a PHY module 122, and an LED (Light Emitting Diode) 123. The third port 18 includes a MAC unit 181, a PHY module 182, and an LED 183. The third port 18 may have a similar structure to the first port 12, or may have a different structure from the first port 12.

Next, the second network switching apparatus 2 has a similar structure, for example, to the first network switching apparatus 1.
The second port 22 has a similar structure to the first port 12, and the fourth port 28 has a similar structure to the third port 18. The second network switching apparatus 2 may have a different structure from the first network switching apparatus 1.

For example, when the switch management unit 111 of the first network switching apparatus 1 is to be distinguished from the switch management unit 111 of the second network switching apparatus 2, the switch management unit of the first network switching apparatus 1 is expressed as "111A", and the switch management unit of the second network switching apparatus 2 is expressed as "111B" . In other words, a reference sign A will be given to the elements of the first network switching apparatus 1, and a reference sign B will be given to the elements of the second network switching apparatus 2.

The PHY module 122 is a physical device that performs data transmission, data reception, and signal conversion in a physical layer, where the physical layer is located at the first layer of the seventh layer of the OSI reference model in which the functions of the network are expressed in a hierarchical structure, regarding a transmission/reception frame performing transmission and reception. The position at which the PHY module 122 is implemented is indicated by a port number. The port number is the identification information by which the first port 12 is uniquely identified in the first network switching apparatus 1. The PHY module 122 transmits the reception frame received through a cable, an optical cable, or the like to the MAC unit 121. Moreover, the PHY module 122 transmits the transmission frame provided by the MAC unit 121 to the destination PHY module through a cable or an optical cable. A similar configuration applies to the PHY module 182.

The MAC unit 121 is provided for the PHY module 122 on a one-to-one basis, and performs transmission control for a transmission/reception frame. As transmission control, for example, frame format detection or error detection is performed. A similar configuration applies to the MAC unit 181.

The MAC unit 121 transmits the reception frame provided by the PHY module 122 to the transmission/reception controller 15. Moreover, the MAC unit 121 transmits the transmission frame provided by the transmission/reception controller 15 to the PHY module 122. On the other hand, the MAC unit 181 transmits the reception frame provided by the PHY module 182 to the data switching unit 13. Moreover, the MAC unit 181 transmits the transmission frame provided by the data switching unit 13 to the PHY module 182.

An LED 123 indicates the state of the first port 12 by lighting up in accordance with the control made by the aggregation controller 112. For example, the state of the first port 12 is indicated by "green", "light off", and "flashing orange", which correspond to a linked-up state, a linked-down state, and an error state of the first port 12, respectively. A similar configuration applies to the LED 183.

The power source controller 16 controls the power supply to the PHY modules 122 and the PHY module 182. In particular, the power source controller 16 supplies or cuts power to the PHY modules 122 and the PHY module 182 in accordance with the control made by the switch management unit 111.

The transmission/reception controller 15 is a controller, parser, multiplexer, or the like that is provided for the MAC unit 121 on a one-to-one basis. When an LACP frame is received from the MAC unit 121, the transmission/reception controller 15 transmits the LACP frame to the aggregation controller 112. When a frame other than an LACP frame is received from the MAC unit 121, the transmission/reception controller 15 transmits a frame other than an LACP frame to the aggregator 14. The transmission/reception controller 15 transmits the frame transmitted from the aggregator 14 to the corresponding MAC unit 121 just as it is.

The aggregator 14 is provided for each of the LAGs 5. The aggregator 14 transmits the reception frame provided by the corresponding first port 12 to the data switching unit 13. Moreover, the aggregator 14 distributes the transmission frame provided by the data switching unit 13 to the first ports 12 that belong to the LAG 5 in accordance with a specified communication protocol.

The data switching unit 13 switches between frames. In other words, the data switching unit 13 specifies the destination aggregator 14 according to the destination MAC of the frame received from the aggregator 14, and transmits the received frame to the specified destination aggregator 14.

The monitoring unit 17 retains the available bandwidth information collected from each of the first ports 12 to be monitored. The available bandwidth information includes, for example, the amount of transmission and reception at each of the first ports 12, the amount of transmission and reception at the LAG 5, the number of errors at each of the first ports 12, and the number of errors at the LAG 5. Moreover, the monitoring unit 17 retains the available bandwidth information collected from the third port 18 to be monitored. The available bandwidth information includes, for example, the amount of transmission and reception at the third port 18, and the number of errors at the third port 18. When there are two or more LAGs 5, the amount of transmission and reception or the number of errors is collected from each link aggregation group.

The switch management unit 111 uses a port state management table 113, which will be described later, to manage each of the first ports 12 and the third port 18 included in the first network switching apparatus 1. In particular, the switch management unit 111 monitors the PHY modules 122 and the PHY module 182 that are implemented at the first ports 12 and the third port 18. Moreover, the switch management unit 111 assesses the transmission line state (link status) according to the results of a monitoring process, and controls the power supply to the PHY modules 122 and the PHY module 182 through the power source controller 16 according to the requests from the aggregation controller 112.

The aggregation controller 112 uses a LAG management table 114, which will be described later, to manage the LAG 5. In particular, the aggregation controller 112 uses an LACP frame to exchange link aggregation information related to the LAG 5 with the other aggregation controller 112. The LACP frame complies with the link aggregation control protocol described as above.

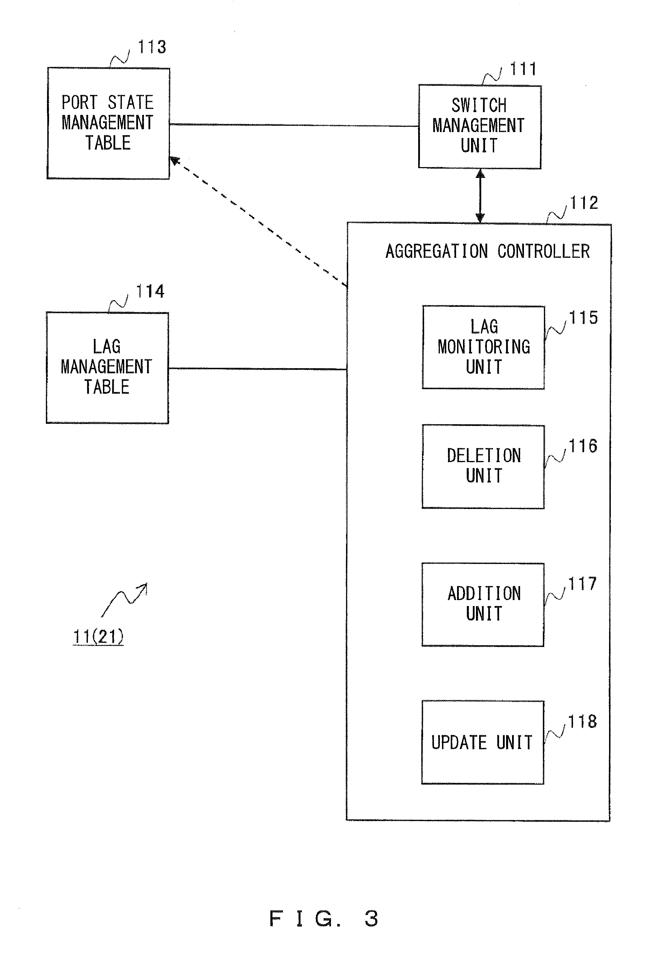

FIG. 3 illustrates an example of the configuration of a link aggregation controller.

The link aggregation controller 11 includes the switch management unit 111, the aggregation controller 112, the port state management table 113, and the LAG management table 114. The aggregation controller 112 includes a LAG monitoring unit 115, a deletion unit 116, an addition unit 117, and an update unit 118.

The link aggregation controller 21 has a similar structure to the link aggregation controller 11. For example, when the aggregation controller 112 of the link aggregation controller 11 is to be distinguished from the aggregation controller 112 of the link aggregation controller 21, the aggregation controller of the link aggregation controller 11 is expressed as "112A", and the aggregation controller of the link aggregation controller 21 is expressed as "112B" . In other words, a reference sign A will be given to the elements of the link aggregation controller 11, and a reference sign B will be given to the elements of the link aggregation controller 21.

When the first network switching apparatus 1 to which the aggregation controller 112 belongs is the master unit in the link aggregation control, the aggregation controller 112 performs a deleting process or adding process for the link of the LAG 5 according to the results of the monitoring of the LAG 5. In the ECO processing mode, the master unit in the link aggregation control reduces or increases the number of links of the LAG 5. The monitoring of the LAG 5 is performed by the LAG monitoring unit 115. The deleting process for the links of the LAG 5 is performed by the deletion unit 116. The adding process for the links of the LAG 5 is performed by the addition unit 117.

When the first network switching apparatus 1 to which the aggregation controller 112 belongs is the slave unit in the link aggregation control, the aggregation controller 112 performs an updating process for the links of the LAG 5 in accordance with the results of the deleting process or adding process for the links of the LAG 5 performed by the second network switching apparatus 2 that is the master unit. In the ECO processing mode, the slave unit in the link aggregation control follows the deleting process or increasing process for the number of the links of the LAG 5, which is performed by the master unit. The updating process for the links, which follows the results of the deleting process or adding process for the links performed by the master unit, is performed by the update unit 118.

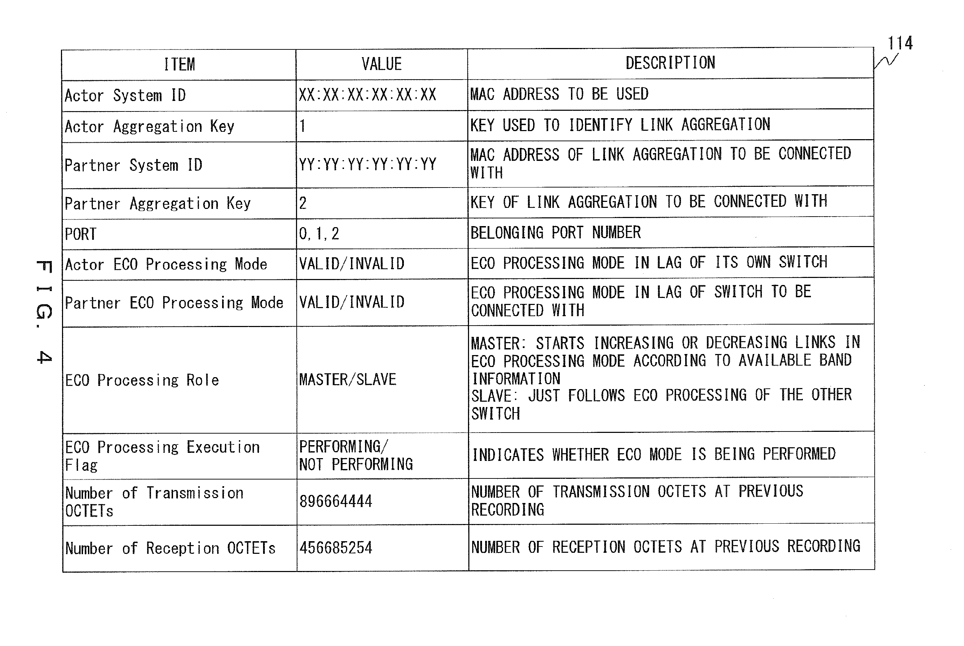

In the examples of FIGs. 1-3, the first network switching apparatus 1 is the master unit in the link aggregation control, and the second network switching apparatus 2 is the slave unit in the link aggregation control. In the LAG management table 114, which of the network switching apparatuses 1 and 2 is to become the master unit is determined in advance. The LAG management table 114 will be described later with reference to FIG. 4.

The aggregation controller 112 calculates the desired number of links according to the available bandwidth information of the LAG 5, and compares the desired number of links with the number of the links that are currently linked up in the LAG 5. The available bandwidth information of the LAG 5 is acquired from the monitoring unit 17. When the desired number of links is less than the number of the links that are currently linked up in the LAG 5, the aggregation controller 112 performs a linking down process as a process of deleting links in accordance with the results of the comparison between the desired number of links and the number of the links that are currently linked up in the LAG 5. When the desired number of links is greater than the number of the links that are currently linked up, the aggregation controller 112 performs a linking-up process as a process of adding links in accordance with the results of the comparison between the desired number of links and the number of the links that are currently linked up in the LAG 5.

The aggregation controller 112 performs a deleting process for the links of the LAG 5 according to the available bandwidth information of the LAG 5. In particular, the aggregation controller 112 cuts off the power supply to at least one of the first ports 12, and performs a linking down process.

Any of the process of cutting the power supply to the first port 12 and the linking down process of the first port 12 may be performed first. In the example of FIG. 3, the aggregation controller 112 performs a linking down process for at least one of the first ports 12 by cutting off the power supply to at least one of the first ports 12.

After the linking down process is performed, the aggregation controller 112 transmits to the second network switching apparatus 2 a link-down completion notice that indicates the completion of a linking down process. The second network switching apparatus 2 that has received the link-down completion notice cuts off the power supply to at least one of the second ports 22 that is linked down. Accordingly, it becomes possible to cut off the power supply to the first port 21 and the second port 22 at both ends of the link.

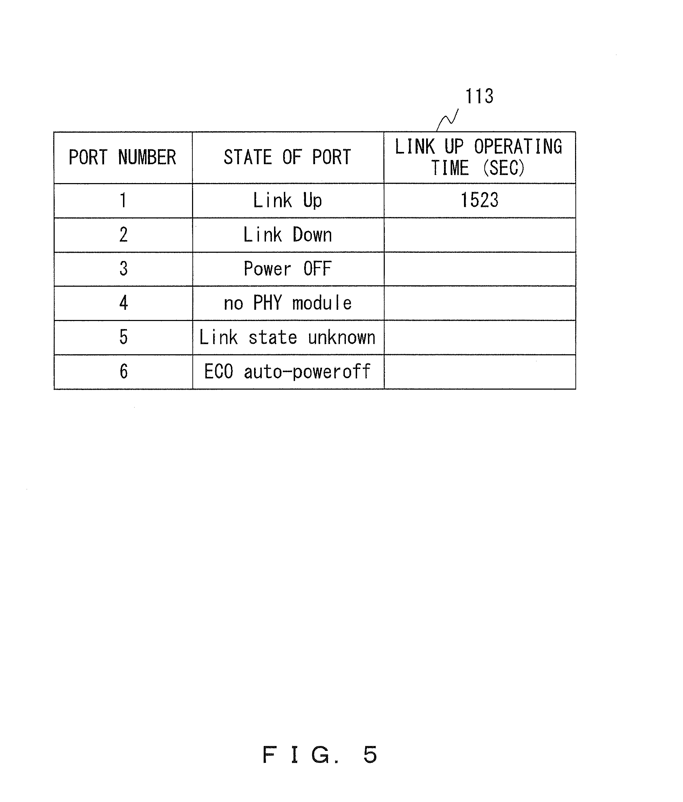

The aggregation controller 112 excludes at least one of the first ports 12 in which the power supply is cut off from the target to which an error indicating link-down is sent according to the available bandwidth information. Accordingly, it becomes possible for the first network switching apparatus 1 to distinguish between a link-down caused by the cutting off of the power supply and a true link-down caused by an error according to the available bandwidth information. The information indicating whether or not to send an error notice is set in the port state management table 113. The port state management table 113 will be described later with reference to FIG. 5.

In the second network switching apparatus 2, the aggregation controller 112B excludes the second port 22 connected to the first port 12 that is linked down due to the cutting off of the power supply through a cable or the like from the target to which an error indicating link-down is sent according to the available bandwidth information. Accordingly, it becomes possible for the second network switching apparatus 2 to distinguish between a link-down caused by the cutting off of the power supply and a true link-down caused by an error according to the available bandwidth information.

The aggregation controller 112 sends a link-down start notice to the second network switching apparatus 2 prior to the process of deleting links, i.e., the linking down process. The second network switching apparatus 2 that has received the link-down start notice turns on the power source of all the second ports 22, and sends a reply to the link-down start notice to the aggregation controller 112. The aggregation controller 112 that has received the reply to the link-down start notice performs a linking down process.

Accordingly, the power source of all the second ports 22 is turned on, and then only the power source of the second ports 22 in which the links are not linked up is cut off. For this reason, it is possible to perform a linking down process for the second ports 22 of the second network switching apparatus 2 independently from a linking down process performed by the aggregation controller 112 for the first ports 12. Moreover, it becomes no longer necessary for a user to link-down the second ports 22 of the second network switching apparatus 2 according to the monitoring of the first ports 12 of the aggregation controller 112 by a user or a network monitoring device.

The aggregation controller 112 performs an adding process for the links of the LAG 5 according to the available bandwidth information of the LAG 5. In particular, the aggregation controller 112 turns on the power source of at least one of the first ports 12 and links up the first port 12. Note that the first port 12 that is linked up is the port in which the power source is turned on.

After the linking-up process is completed, the aggregation controller 112 transmits a link-up completion notice to the second network switching apparatus 2. The second network switching apparatus 2 that has received the link-up completion notice cuts off the power supply to the second port 22 that is linked down from among the second ports 22. Accordingly, it becomes possible to cut off the power supply to the first port 21 and the second port 22 at both ends of the link.

The aggregation controller 112 sends a link-up start notice to the second network switching apparatus 2 prior to the process of adding links. The second network switching apparatus 2 that has received the link-up start notice turns on the power source of all the second ports 22, and sends a reply to the link-up start notice to the aggregation controller 112. The aggregation controller 112 that has received the reply to the link-up start notice performs a linking-up process.

Accordingly, the power source of all the second ports 22 is turned on, and then only the power source of the second ports 22 in which the links are not linked up is cut off. For this reason, it is possible to perform a linking-up process for the second ports 22 of the second network switching apparatus 2 independently from a linking-up process performed by the aggregation controller 112 for the first ports 12. Moreover, it becomes no longer necessary to link up the second ports 22 of the second network switching apparatus 2 according to the monitoring of the first ports 12 of the aggregation controller 112 by a user or a network monitoring device.

The aggregation controller 112 creates and uses an LA-ECO frame in the linking-up process and linking down process. The LA-ECO frame is used to cut off the power supply to a port to reduce the power consumption. In other words, the LA-ECO frame is used to realize an ECO processing mode that will be described later. In particular, the LA-ECO frame is a kind of LACP frame, and is a frame for a link-up start notice, a link-up completion notice, a link-down start notice, and a link-down completion notice. Moreover, the LA-ECO frame is used for a reply to the link-up start notice, a reply to the link-up completion notice, a reply to the link-down start notice, and a reply to the link-down completion notice.

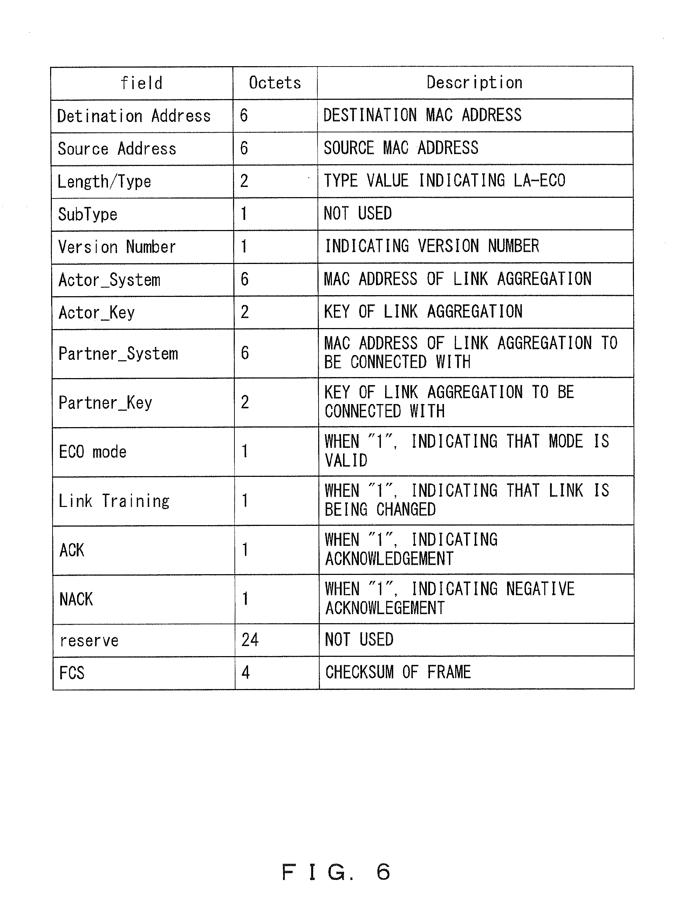

For example, one or a plurality of OCTETs at specified positions among a plurality of OCTETs included in a frame (hereinafter, referred to as a specific OCTET) is used to determine whether or not the frame is an LA-ECO frame. In other words, a specific OCTET in an LA-ECO frame involves a specified value. Further, a frame is determined to belong to one of the link-up start notice, the link-up completion notice, the link-down start notice, and the link-down completion notice, or to belong to a response to one of these notices, according to a value of a specific OCTET in an LA-ECO frame. The LA-ECO frame will be described later with reference to FIG. 6.

When the first network switching apparatus 1 to which the aggregation controller 112 belongs is the master unit in the link aggregation control, the aggregation controller 112 performs a shifting process for a port (i.e., link) that is linked up in the LAG 5 according to the results of a monitoring process for the LAG 5. In particular, the aggregation controller 112 determines whether the period of a link up of a port that is currently linked up exceeds a specified threshold, according to the available bandwidth information of the LAG 5. The period of a link up is indicated as "link-up operating time" in the port state management table 113, as will be described later.

When there is a port in which the period of a link up exceeds a threshold, the aggregation controller 112 performs a linking down process for the port in which the period of a link up exceeds a threshold after a linking-up process is performed. Moreover, the aggregation controller 112 selects the same number of ports as the number of ports for which a linking down process is performed from a plurality of ports that are linked down, and performs a linking-up process for the selected ports.

Due to the above shifting process of ports, even if the available bandwidth secured by a link aggregation group is excessive in the LAG 5, it is possible to prevent the situation in which a specific link is linked down and the power source of the specific link remains cut off. For example, in cases where a specific link is linked down and the power source remains cut off, even if a hardware failure or the like occurs at the specific link, it is not possible to detect such a hardware failure or the like until that specific link is linked up due to the lack of available bandwidth in the LAG 5. However, it is possible to prevent a situation in which the power source of a specific link remains cut off. Accordingly, it is possible to detect a hardware failure or the like as needed basis, and an instantaneous lack of bandwidth may be prevented. Moreover, it is possible to prevent the operating time of only the components of a specific link from increasing, and the hardware failure may be equalized.

FIG. 4 depicts an example of the LAG management table.

The LAG management table 114 stores the information about the current status of the LAG 5 on an item-by-item basis. The items for the management of the status of the LAG 5 include "Actor System ID" , "Actor Aggregation Key" , "Partner System ID" , "Partner Aggregation Key", "PORT" , "Actor ECO processing mode", "Partner ECO processing mode", "ECO Processing Role", "ECO processing execution flag", "Number of Transmission OCTETs", and "Number of Reception OCTETs".

Here, "Actor" indicates that the item is related to its own switching apparatus. "Partner" indicates that the item is related to a switch to be connected with. Accordingly, in the LAG management table 114 provided for the first network switching apparatus 1, "Actor" indicates the first network switching apparatus 1 and "Partner" indicates the second network switching apparatus 2.

"Actor System ID" indicates the MAC address used by the LAG 5 in its own switching apparatus, i.e., the first network switching apparatus 1. "Actor Aggregation Key" indicates the identification information used to identify the LAG 5 in its own switching apparatus, i.e., the first network switching apparatus 1.

"Partner System ID" indicates the MAC address used by the LAG 5 of the switch to be connected with, i.e., the second network switching apparatus 2, in the first network switching apparatus 1. "Partner Aggregation Key" indicates the identification information used to identify the LAG 5 in the switch to be connected with, i.e., the second network switching apparatus 2.

"PORT" indicates the port number of its own switching apparatus, i.e., the first port 12, which belongs to the LAG 5 in the first network switching apparatus 1.

"Actor ECO processing mode" indicates whether the ECO processing mode is valid or invalid in the LAG 5 of its own switching apparatus, i.e., the first network switching apparatus 1. "Partner ECO processing mode" indicates whether the ECO processing mode is valid or invalid in the LAG 5 of the switch to be connected with, i.e., the second network switching apparatus 2.

Here, "ECO processing mode" indicates a mode in which the power supply to a port is cut off to reduce the power consumption. In other words, "ECO processing mode" indicates a mode realized by an LA-ECO frame. Accordingly, the first network switching apparatus 1 is set to an ECO state when "Actor ECO processing mode" is "valid" , and the first network switching apparatus 1 is set to a state other than the ECO state, i.e., a normal state, when "Actor ECO processing mode" is "invalid". The ECO state will be described later with reference to FIG. 5. Also, the second network switching apparatus 2 is set to the ECO state when "Partner ECO processing mode" is "valid", and the second network switching apparatus 2 is set to states other than the ECO state, i.e., a normal state, when "Partner ECO processing mode" is "invalid".

"ECO Processing Role" indicates whether its own switching apparatus, i.e., the first network switching apparatus 1, is the master unit or the slave unit in the ECO processing mode. When the first network switching apparatus 1 is the master unit, the ECO Processing Role is set to "MASTER". Hence, the first network switching apparatus 1 increases or decreases the number of links of the LAG 5 in the ECO processing mode according to the available bandwidth information. When the first network switching apparatus 1 is the slave unit, the ECO Processing Role is set to "SLAVE". Hence, in the ECO processing mode, the first network switching apparatus 1 follows the ECO processing performed by the second network switching apparatus 2 that is the master unit.

"ECO processing execution flag" indicates whether its own switching apparatus, i.e., the first network switching apparatus 1, is performing an ECO processing or is at rest. In other words, "ECO processing execution flag" indicates whether or not the first network switching apparatus 1 is in the ECO processing mode.

"Number of Transmission OCTETs" indicates the number of OCTETs that have been transmitted through the LAG 5. "Number of Reception OCTETs" indicates the number of OCTETs that have been received through the LAG 5.

The LAG management table 114 is created by the aggregation controller 112. When the LAG 5 is configured, each of "Actor System ID" , "Actor Aggregation Key" , "Partner System ID" , "Partner Aggregation Key", and "PORT" in the LAG management table 114 is input, for example, from a computer connected to the first or second network device to the aggregation controller 112. When the ECO processing mode is performed, each of "Actor ECO processing mode", "Partner ECO processing mode", "ECO Processing Role", and "ECO processing execution flag" is set by the aggregation controller 112. In the ECO processing mode, "Number of Transmission OCTETs" and "Number of Reception OCTETs" are set by the aggregation controller 112 that has acquired "Number of Transmission OCTETs" and "Number of Reception OCTETs" from the monitoring unit 17.

The link aggregation controller 11 includes the LAG management table 114A that manages the LAG 5. In the LAG management table 114A of the first network switching apparatus 1, the first network switching apparatus 1 is registered as the master unit, and the second network switching apparatus 2 is registered as the slave unit. Hence, the aggregation controller 112A of the first network switching apparatus 1, as the master unit, determines whether or not each of the linking down process and linking-up process is to be performed for a plurality of ports that belong to the LAG 5.

The link aggregation controller 21 includes the LAG management table 114B that manages the LAG 5. In the LAG management table 114B of the second network switching apparatus 2, the first network switching apparatus 1 is registered as the master unit, and the second network switching apparatus 2 is registered as the slave unit. Hence, the aggregation controller 112B of the second network switching apparatus 2, as the slave unit, performs the updating process for links of the LAG 5 in accordance with the results of the deleting process or adding process for the links of the LAG 5, which is performed by the first network switching apparatus 1 as the master unit.

FIG. 5 depicts an example of the port state management table.

The port state management table 113 stores the information of the state of ports for every port. In the port state management table 113, the ports are indicated by port numbers. In FIG. 5, it is assumed that there are six ports with port numbers 1-6 that belong to the LAG 5, and that each of the six ports is in a different port state.

The port state information includes "Link Up", "Link-down" , "power OFF" , "no PHY module", "Link state unknown", and "ECO auto-poweroff".

"Link Up" indicates that a port is linked up. When the port state indicates that a port is linked up, link-up operating time is also stored. The link-up operating time indicates the period during which a port keeps operating since the port is linked up. The unit of the link-up operating time is, for example, a second.

"Link-down" indicates that a port is linked down. "Power OFF" indicates that the power supply to a port is cut off. "no PHY module" indicates that the state of a PHY module is unknown because, for example, the PHY module of a port is not recognizable. "Link state unknown" indicates that the state of the link of a port is unknown.

"ECO auto-poweroff" indicates that a port is in the ECO state. "ECO auto-poweroff", in other words, the ECO state, indicates that the power supply to a port is cut off so as to reduce the power consumption. For this reason, when a port is linked down because the port is in the ECO state, it becomes possible to recognize that the link-down is not caused by a hardware failure or line failure but is caused by the cutting off of the power supply to the port for the reduction of the power consumption.

The port state management table 113 is created by the switch management unit 111. In the port state management table 113, "Link Up", "Link-down", "Power OFF", and "no PHY module" are updated by the switch management unit 111. Moreover, "Link Up", "Link-down", "Link state unknown", and "ECO auto-poweroff" are updated by the switch management unit 111 according to a request from the aggregation controller 112 at a specified timing, as will be described later.

The link aggregation controller 11 includes the port state management table 113A that manages the state of the first port 12. In the first network switching apparatus 1, the state of at least one of the first ports 12 in which the power supply is cut off according to the available bandwidth information is registered in the port state management table 113A as the ECO state, in other words, as "ECO auto-poweroff". The ECO state indicates a state where the power supply to a port is cut off so as to reduce the power consumption, and indicates a state realized by an LA-ECO frame. The ECO state is distinguished from the cutting off of the power source, which is irrelevant to the available bandwidth information. Hence, the aggregation controller 112A excludes the occurrence of a link-down at at least one of the first ports 12 that is registered in the port state management table 113A as being in the ECO state from the target of an error notice.

The link aggregation controller 21 includes the port state management table 113B that manages the state of the second port 22. In the second network switching apparatus 2, the state of at least one of the second ports 22 that is linked down according to the link-down of at least one of the first ports 12 in which the power supply is cut off according to the available bandwidth information is registered in the port state management table 113B as the ECO state, in other words, as "ECO auto-poweroff". Hence, the aggregation controller 112B excludes the link-down at at least one of the second ports 22 that is registered in the second port state management table 113B as being in the ECO state from the target of an error notice.

FIG. 6 depicts examples of the LA-ECO frame. In fact, FIG. 6 depicts LA-ECO frames, i.e., the description of fields, the number of OCTETs in the fields, and the information stored in the fields in an ECO state notification frame.

"Destination Address" is a field in which the destination MAC address of an LA-ECO frame is stored. "Source Address" is a field in which the source MAC address of an LA-ECO frame is stored. "Length/Type" is a field in which the type value indicating that the LA-ECO frame is an LA-ECO frame is stored. "Subtype" is a field that is not used in the network switching apparatuses 1 and 2 of the examples in FIGs. 1 and 2. "Version Number" is a field in which the version number of a link aggregation control protocol is stored.

"Actor System" indicates a field in which the MAC address of the LAG 5 of its own switching apparatus, i.e., the first network switching apparatus 1, is stored. Hence, "Actor System" stores "Actor System ID", which is stored in the LAG management table 114 of FIG. 4. "Actor Key" indicates a field in which the identification information used to identify the LAG 5 is stored, in its own switching apparatus, i.e., the first network switching apparatus 1. Hence, "Actor Key" stores "Actor Aggregation Key" , which is stored in the LAG management table 114 of FIG. 4.

"Partner System" indicates a field in which the MAC address used by the switch to which the first network switching apparatus 1 is connected at the LAG 5, i.e., the MAC address used by the second network switching apparatus 2 at the LAG 5, is stored. Accordingly, "Partner System" stores "Partner System ID" stored in the LAG management table 114 of FIG. 4. "Partner Key" indicates a field in which identification information is stored, which is used to identify the LAG 5 in a switch to be connected with, i.e., the second network switching apparatus 2. Accordingly, "Partner Key" stores "Partner Aggregation Key" , which is stored in the LAG management table 114 of FIG. 4.

"ECO mode" is a field in which the information is stored that indicates whether or not the frame is an LA-ECO frame. When the value of "ECO mode" is "1", the frame is an LA-ECO frame, and thus the ECO processing mode is valid. When the value of "ECO mode" is "0", the ECO processing mode is invalid. "Link Training" is a field in which the information is stored that indicates whether or not the port for linking is being changed in the ECO processing mode. When the value of "Link Training" is "1", this indicates that the first network switching apparatus 1 is changing the port for linking. When the value of "Link Training" is "0", this indicates that the first network switching apparatus 1 is not changing the port for linking.

"ACK" and "NACK" are fields in which responses to the firstly received frame are stored. When the value of "ACK" is "1", this indicates that the notification of the firstly received frame is acknowledged. When the value of "NACK" is "1", this indicates that the notification of the firstly received frame is not acknowledged. "reserve" indicates a reserved field that is not used in the network switching apparatuses 1 and 2 of the examples in FIGs. 1 and 2. "FCS" is a field in which the checksum of the frame is stored.

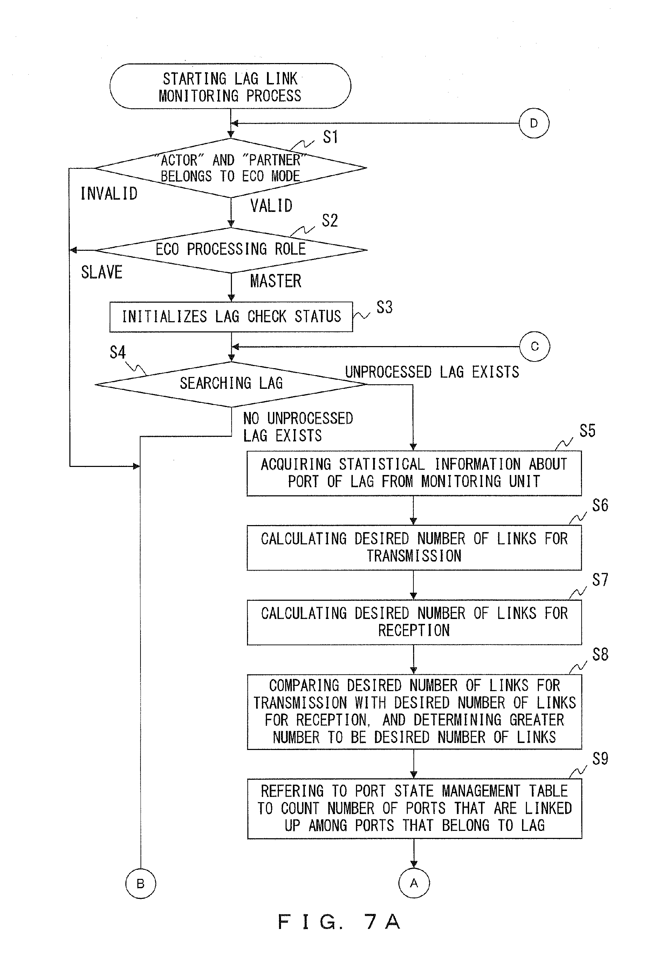

Hereinafter, the aggregation controller 112 will be described in detail with reference to FIGs. 7A-13.

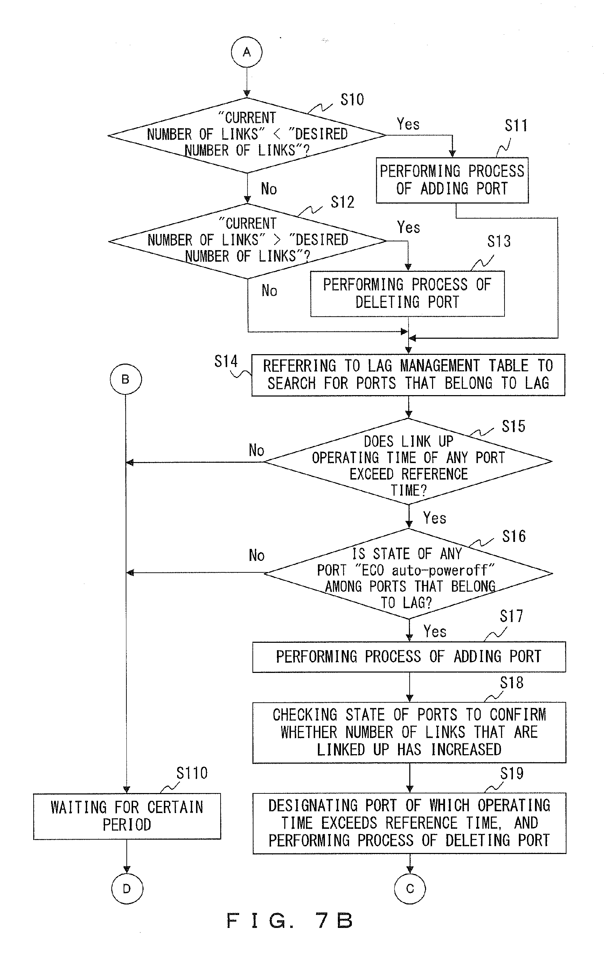

A combination of FIGs. 7A and 7B illustrates the flow of a link aggregation monitoring process performed by the aggregation controller 112A of the first network switching apparatus 1.

In the aggregation controller 112A, the LAG monitoring unit 115A refers to the LAG management table 114A to determine whether "Actor ECO processing mode" and "Partner ECO processing mode" are valid or invalid (step S1). In other words, the LAG monitoring unit 115A determines whether or not the first network switching apparatus 1 as "Actor" and the second network switching apparatus 2 as "Partner" belong to the ECO processing mode.

When it is determined that "Actor ECO processing mode" and "Partner ECO processing mode" are invalid in the LAG management table 114A, the LAG monitoring unit 115A repeats step S1 after a specified length of time has passed (step S110).

When it is determined that "Actor ECO processing mode" and "Partner ECO processing mode" are valid in the LAG management table 114A, the LAG monitoring unit 115A refers to the LAG management table 114A to assess "ECO Processing Role" (step S2). In other words, the LAG monitoring unit 115A determines whether or not the first network switching apparatus 1 to which the LAG monitoring unit 115A belongs is the master unit.

When "ECO Processing Role" is the "slave unit (indicated as "SLAVE" in FIG. 7A)", the LAG monitoring unit 115A repeats step S1 after a specified length of time has passed (step S110).

When "ECO Processing Role" is the "master unit (indicated as "MASTER" in FIG. 7A)", the LAG monitoring unit 115A initializes a LAG check status storage area in which LAG check status is stored (step S3), and searches the LAG 5 (step S4). In other words, in step S4, the LAG monitoring unit 115A determines whether a LAG 5 exists for which a link aggregation monitoring process has not been performed. The LAG check status storage area is arranged, for example, within a memory of the LAG monitoring unit 115A.

When a LAG 5 does not exist for which a link aggregation monitoring process has not been performed, the LAG monitoring unit 115A repeats step S1 after a specified length of time has passed (step S110).

When a LAG 5 exists for which a link aggregation monitoring process has not been performed, the LAG monitoring unit 115A selects one of the LAGs 5 from among LAGs 5 for which a link aggregation monitoring process has not been performed, and acquires statistical information about the selected LAG 5 from the monitoring unit 17A (step S5). As the statistical information, "Number of Transmission OCTETs" and "Number of Reception OCTETs" are acquired. "Number of Transmission OCTETs" acquired from the monitoring unit 17A is "Current Number of Transmission OCTETs", and "Number of Reception OCTETs" acquired from the monitoring unit 17 is "Current Number of Reception OCTETs". "Current Number of Transmission OCTETs" and "Current Number of Reception OCTETs" are stored in the LAG check status storage area.

After that, the LAG monitoring unit 115A calculates the desired number of links for transmission (step S6). In particular, the LAG monitoring unit 115A refers to the LAG management table 114A to acquire "Number of Transmission OCTETs" . "Number of Transmission OCTETs acquired from the LAG management table 114A is equivalent to "Previous Number of Transmission OCTETs". "Previous Number of Transmission OCTETs" is stored in the LAG check status storage area. After that, the LAG monitoring unit 115A uses the value stored in the LAG check status storage area to divide {(Current Number of Transmission OCTETs)-(Previous Number of Transmission OCTETs)} by (reference band of one link per unit time). Accordingly, "desired number of links for transmission" is calculated. The reference band of one link per unit time is empirically known, and thus is specified in advance. The "desired number of links for transmission" is stored in the LAG check status storage area.

Next, the LAG monitoring unit 115A calculates the desired number of links for reception (step S7). In particular, the LAG monitoring unit 115A refers to the LAG management table 114A to acquire "Number of Reception OCTETs". "Number of Reception OCTETs acquired from the LAG management table 114A is equivalent to "Previous Number of Reception OCTETs". "Previous Number of Reception OCTETs" is stored in the LAG check status storage area. Subsequently, the LAG monitoring unit 115A uses the value stored in the LAG check status storage area to divide {(Current Number of Reception OCTETs)-(Previous Number of Reception OCTETS)} by (reference band of one link per unit time). By so doing, "desired number of links for reception" is calculated. The "desired number of links for reception" is stored in the LAG check status storage area.

Further, the LAG monitoring unit 115A uses the value stored in the LAG check status storage area to compare the desired number of links for transmission with the desired number of links for reception. Then, the LAG monitoring unit 115A determines the greater number to be "desired number of links" in the LAG 5 (step S8). When the "desired number of links" becomes "0", the "desired number of links" is changed to "1" to prevent the communication between the first network switching apparatus 1 and the second network switching apparatus 2 from being completely blocked. The "desired number of links" is stored in the LAG check status storage area.

After that, the LAG monitoring unit 115A refers to the port state management table 113A to count the number of the first ports 12 that are linked up at that time from among the first ports 12 that belong to the LAG 5 (step S9). In other words, the LAG monitoring unit 115A extracts the number of the first ports 12 in which the port state is "Link Up" in the port state management table 113A as "current number of links". The extracted "current number of links" is stored in the LAG check status storage area.

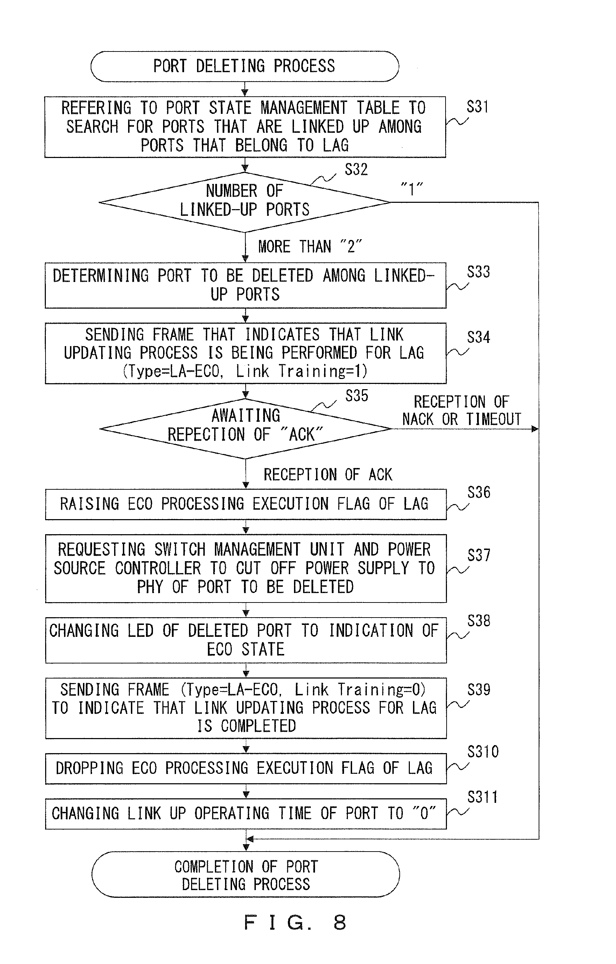

Then, the LAG monitoring unit 115A uses the value stored in the LAG check status storage area to determine whether or not "current number of links" is less than "desired number of links" (step S10). When "current number of links" is less than "desired number of links" ("Yes" in step S10), the LAG monitoring unit 115A performs a process of adding the first port 12 (step S11). In reality, the addition unit 117A that is started by the LAG monitoring unit 115A performs the process of adding the first port 12. The process of adding the first port 12 will be described later with reference to FIG. 8. After step S11, step S14 is executed.

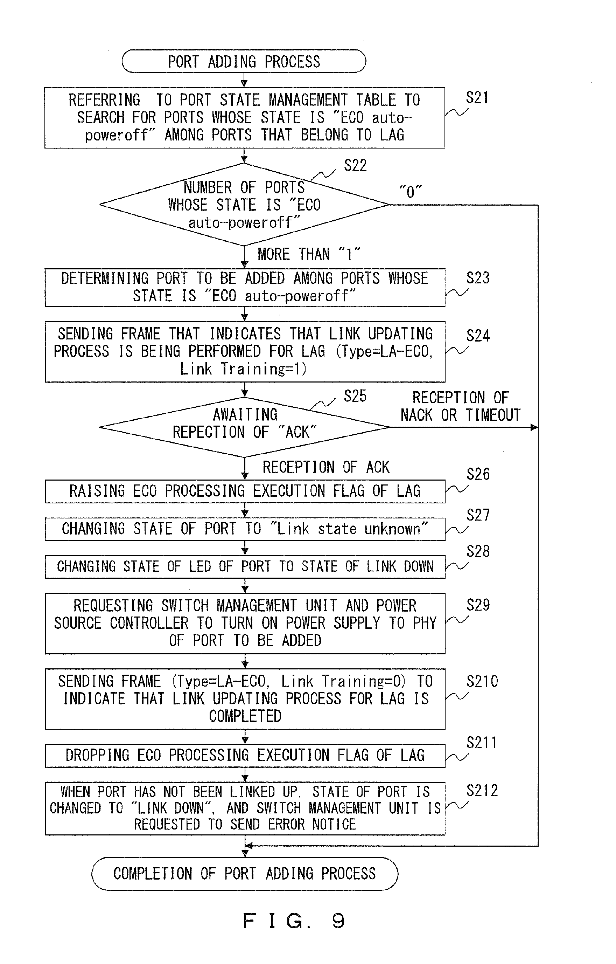

When "current number of links" is greater than "desired number of links" ("No" in step S10), the LAG monitoring unit 115A further uses the value stored in the LAG check status storage area to determine whether or not "current number of links" is greater than "desired number of links" (step S12). When "current number of links" is greater than "desired number of links" ("Yes" in step S12), the LAG monitoring unit 115A performs the process of deleting the first port 12 (step S13) . In reality, the deletion unit 116A that is started by the LAG monitoring unit 115A performs the process of deleting the first port 12. The process of deleting the first port 12 will be described later with reference to FIG. 9. After step S13, step S14 is executed.

When "current number of links" is less than "desired number of links" ("No" in step S12), i.e., when "current number of links" is equal to "desired number of links", the LAG monitoring unit 115A performs the process of shifting the first port 12. In particular, the LAG monitoring unit 115A refers to the LAG management table 114A to extract the first ports 12 that belong to the LAG 5 (step S14), and refers to the port state management table 113A to determine whether or not the link-up operating time of any of the first ports 12 exceeds a reference time from among the first ports 12 that belong to the LAG 5 (step S15). The reference time is set in advance.

When none of the link-up operating times of the first ports 12 exceeds a reference time ("No" in step S15), the LAG monitoring unit 115A repeats step S1 after a specified length of time has passed (step S110).

When the link-up operating time of any of the first ports 12 does exceed a reference time ("Yes" in step S15), the LAG monitoring unit 115A refers to the port state management table 113A to determine whether or not the port state of any of the first ports 12 from among the first ports 12 that belong to the LAG 5 is "ECO auto-poweroff" (step S16).

When none of the port states of the first ports 12 is "ECO auto-poweroff" ("No" in step S16), the LAG monitoring unit 115A repeats step 51 after a specified length of time has passed (step S110).

When the port state of any of the first ports 12 is "ECO auto-poweroff" ("Yes" in step S16), the LAG monitoring unit 115A performs a process of adding the first port 12 (step S17) . As mentioned above, the process of adding the first port 12 will be described later with reference to FIG. 8.

After that, the LAG monitoring unit 115A checks the state of the first ports 12 that belong to the LAG 5 to confirm whether the number of the links that are linked up has become greater than "current number of links" (step S18). When the number of the links that are linked up has not become greater than "current number of links", the LAG monitoring unit 115A repeats step S17. After that, the LAG monitoring unit 115A designates the first port 12 in which the link-up operating time exceeds a reference time, which is extracted in step S15, and performs the process of deleting the first port 12 (step S19). As mentioned above, the process of deleting the first port 12 will be described later with reference to FIG. 9. After that, the LAG monitoring unit 115A repeats step S4.

FIG. 8 illustrates the flow of the port adding process performed by the aggregation controller 112A of the first network switching apparatus 1.

In the aggregation controller 112A, the addition unit 117A refers to the port state management table 113A to extract the first port 12 in which the port state is "ECO auto-poweroff" from the first ports 12 that belong to the LAG 5 (step S21). Then, the addition unit 117A determines whether the number of the first ports 12 in which the port state is "ECO auto-poweroff" is "0" or "1 or more" (step S22). When the number of the first ports 12 in which the port state is "ECO auto-poweroff" is "0", the addition unit 117A terminates the process.

When the number of the first ports 12 in which the port state is "ECO auto-poweroff" is "1 or more", the addition unit 117A specifies the first port 12 to be newly linked up among the first ports 12 in which the port state is "ECO auto-poweroff" (step S23). The first port 12 to be additionally linked up is selected, for example, from the first ports 12 in which the port state is "ECO auto-poweroff", on a random basis.

Subsequently, the addition unit 117A sends a frame that indicates that an updating process is being performed for a link of the LAG 5, i.e., an LA-ECO frame, to the aggregation controller 112B of the second network switching apparatus 2 (step S24). At this time, "Link Training" is set to "1" in the LA-ECO frame. The LA-ECO frame is equivalent to a link-up start notice.

After that, the addition unit 117A awaits a response to the sent LA-ECO frame from the aggregation controller 112B of the second network switching apparatus 2 (step S25). In other words, the addition unit 117A awaits the reception of a frame where "ACK" indicating acknowledgement in the sent LA-ECO frame is set to "1".

When a frame is received where "NACK" indicating a negative acknowledgement in the sent LA-ECO frame is set to "1", or when a timeout has occurred without receiving anything, the addition unit 117A terminates the process. The timeout period is set in advance.

When a frame is received where "ACK" in the sent LA-ECO frame is set to "1", the addition unit 117A raises the ECO processing execution flag of the LAG 5 in the LAG management table 114A (step S26). Further, the addition unit 117A changes the state of the first port 12 to be additionally linked up, as determined in step S23, from "ECO auto-poweroff" to "Link state unknown" in the port state management table 113A (step S27). Further, the addition unit 117A changes the LED 123 of the first port 12 to be linked up to indicating the state of link-down (step S28).

After that, the addition unit 117A requests a power source controller 16A through the switch management unit 111A to supply power to the PHY module 122 of the first port 12 to be linked up (step S29). In other words, the addition unit 117A issues to the switch management unit 111A a request to supply power to the power source controller 16A, and the switch management unit 111A transfers the received request for a power supply to the power source controller 16A. Then, the power source controller 16A actualizes the power supply as received. By so doing, power is supplied from the power source controller 16A to the PHY module 122 of the first port 12 to be linked up. Accordingly, the first port 12 to be linked up is linked up. Moreover, the addition unit 117A changes the state of the first port 12 to be additionally linked up from "Link state unknown" to "Link Up", in the port state management table 113A.

After that, the addition unit 117A sends a frame that indicates the completion of the updating process for links of the LAG 5, i.e. , an LA-ECO frame, to the aggregation controller 112B of the second network switching apparatus 2 (step S210). At this time, "Link Training" is set to "0" in the LA-ECO frame. The LA-ECO frame is equivalent to a link-up completion notice. Further, the addition unit 117A drops the ECO processing execution flag of the LAG 5 from "1" to "0" in the LAG management table 114A (step S211).

After that, the addition unit 117A examines the state of the first ports 12 that belong to the LAG 5. When it is found that the first port 12 to be linked up has not been linked up as a result of the examination, the addition unit 117A changes the state of the first port 12 to be additionally linked up from "Link state unknown" to "Link-down" in the port state management table 113A, and requests the switch management unit 111A to send an error notice (step S212).

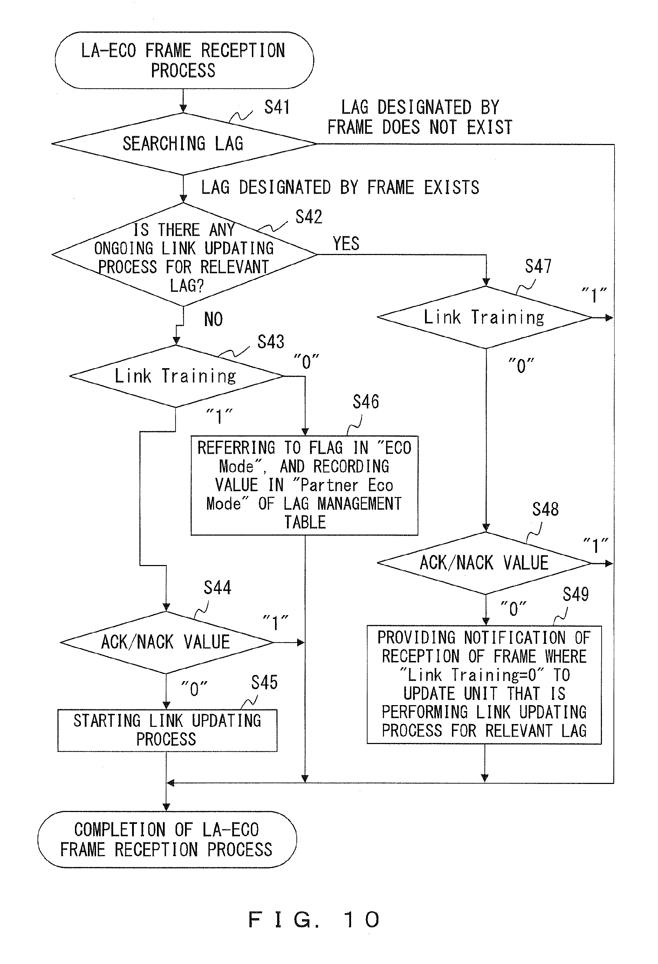

FIG. 10 illustrates the flow of the port deleting process performed by the aggregation controller 112A of the first network switching apparatus 1.

In the aggregation controller 112A, the deletion unit 116A refers to the port state management table 113A to extract the first port 12 in which the port state is "Link Up" from the first ports 12 that belong to the LAG 5 (step S31). Then, the deletion unit 116A determines whether the number of the first ports 12 in which the port state is "Link Up" is "1" or "2 or more" (step S32). When the number of the first ports 12 in which the port state is "Link Up" is "1", the deletion unit 116A terminates the port deleting process.

When the number of the first ports 12 in which the port state is "Link Up" is "2 or more", the deletion unit 116A specifies the first port 12 to be linked down from among the first ports 12 in which the port state is "Link Up" (step S33) . In other words, the deletion unit 116A determines the first port 12 to be deleted from among the first ports 12 that are being linked up. The first port 12 to be deleted from the link up is selected, for example, from the first ports 12 that are being linked up, on a random basis. Note that the first port 12 whose port transition timer value is small may be selected. The port transition timer value is calculated by subtracting "link-up operating time" from "period given to the port", and the port transition timer value indicates the remaining time during which the port is linked up. The "period given to the port" is set sufficiently long that the port transition timer value does not become a negative value. When the first port 12 to be deleted from the link up is designated by a host computer, the designated first port 12 is deleted from the link up.

Subsequently, the deletion unit 116A sends a frame that indicates that an updating process is being performed for a link of the LAG 5, i.e., an LA-ECO frame, to the aggregation controller 112B of the second network switching apparatus 2 (step S34). At this time, "Link Training" is set to "1" in the LA-ECO frame. The LA-ECO frame is equivalent to a link-down start notice.

After that, the deletion unit 116A awaits a response to the sent LA-ECO frame from the aggregation controller 112B of the second network switching apparatus 2 (step S35). In other words, the deletion unit 116A awaits the reception of a frame where "ACK", indicating acknowledgement in the sent LA-ECO frame, is set to "1".

When a frame is received where "NACK", indicating negative acknowledgement in the sent LA-ECO frame, is set to "1", or when a timeout has occurred without receiving anything, the deletion unit 116A terminates the process. The timeout period is set in advance.

When a frame is received where "ACK" in the sent LA-ECO frame is set to "1", the deletion unit 116A raises the ECO processing execution flag of the LAG 5 from "0" to "1" in the LAG management table 114A (step S36).

After that, the deletion unit 116A requests the power source controller 16A through the switch management unit 111A to cut off the power supply to the PHY module 122 of the first port 12 to be deleted from link up (step S37). In other words, the deletion unit 116A issues to the switch management unit 111A a request to cut off the power supply to the power source controller 16A, and the switch management unit 111A transfers the received request to cut off the power supply to the power source controller 16A. Then, the power source controller 16A actualizes the cutting off of the power supply as received. By so doing, the power supply to the PHY module 122 of the first port 12 to be deleted from the link up is cut off. Accordingly, the first port 12 to be deleted from the link up is linked down. Moreover, the deletion unit 116A changes the state of the first port 12 to be deleted from the link up from "Link Up" to "ECO auto-poweroff", in the port state management table 113A. Further, the deletion unit 116A changes the LED 123 of the first port 12 to be deleted from the link up to indicating the ECO state (step S38).

After that, the deletion unit 116A sends a frame that indicates the completion of the updating process for links of the LAG 5, i.e., an LA-ECO frame, to the aggregation controller 112B of the second network switching apparatus 2 (step S39). At this time, "Link Training" is set to "0" in the LA-ECO frame. The LA-ECO frame is equivalent to a link-down completion notice. Further, the deletion unit 116A drops the ECO processing execution flag of the LAG 5 from "1" to "0" in the LAG management table 114A (step S310).

After that, the deletion unit 116A changes the link-up operating time of the first port 12 to be deleted from link up to "0" in the port state management table 113A (step S311), and terminates the process.

FIG. 10 illustrates the flow of an ECO frame reception process performed by the aggregation controller 112B of the second network switching apparatus 2.

In the aggregation controller 112B of the second network switching apparatus 2, when an LA-ECO frame is received from the aggregation controller 112A of the first network switching apparatus 1, the LAG monitoring unit 115B searches the LAG 5 designated by the received LA-ECO frame (step S41). In other words, in step S41, the LAG monitoring unit 115B determines whether or not the LAG 5 designated by the received LA-ECO frame exists.

When the LAG 5 that is designated by the received LA-ECO frame does not exist, the LAG monitoring unit 115B terminates the process.

When the LAG 5 that is designated by the received LA-ECO frame exists, the LAG monitoring unit 115B determines whether or not there is any ongoing updating process for the links in the relevant LAG 5 (step S42).

When there is no ongoing updating process for the links in the LAG 5 designated by the received LA-ECO frame, the LAG monitoring unit 115B determines whether "Link Training" of the received LA-ECO frame is "1" or "0" (step S43).

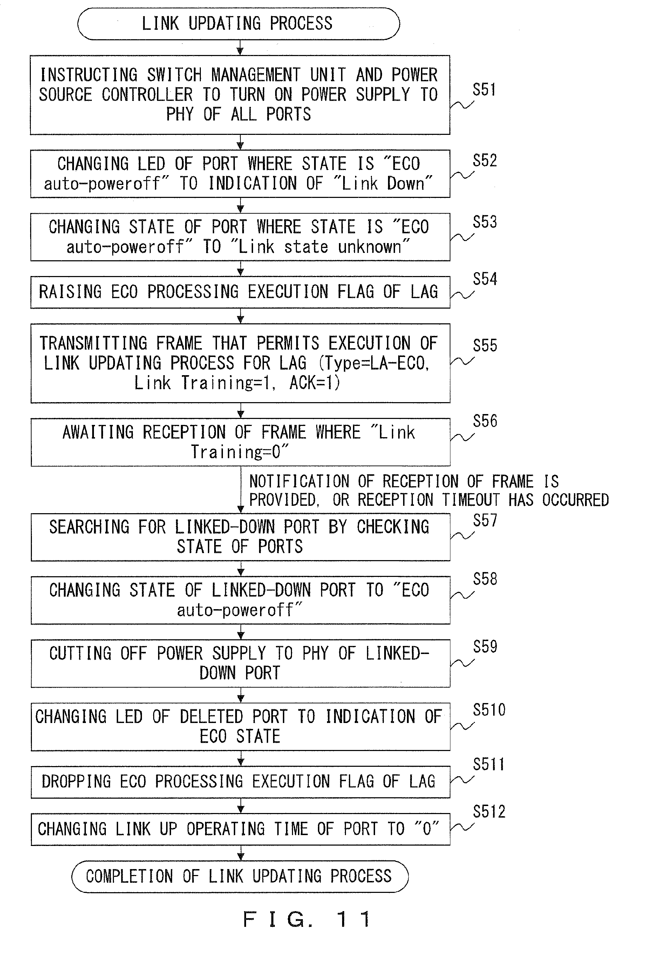

When "Link Training" is "1", the LAG monitoring unit 115B determines whether "ACK" of the received LA-ECO frame is "1" or "0" (step S44). When "ACK" is "0", the LAG monitoring unit 115B starts the update unit 118B that performs an updating process for the links (step S45), and then the LAG monitoring unit 115B terminates the process. The updating process for the links will be described later with reference to FIG. 11. When "ACK" is "1", the LAG monitoring unit 115B terminates the process.

When "Link Training" is "0" in step S43, the LAG monitoring unit 115B refers to "ECO mode" in the received LA-ECO frame, and records the value of "ECO mode" in "Partner ECO processing mode" of the LAG management table 114B (step S46). Then, the LAG monitoring unit 115B terminates the process.

When it is determined in step S42 that an updating process is being performed for the links in the LAG 5 designated by the received LA-ECO frame, the LAG monitoring unit 115B determines whether "Link Training" of the received LA-ECO frame is "1" or "0" (step S47).

When "Link Training" is "1", the LAG monitoring unit 115B terminates the process. When "Link Training" is "0", the LAG monitoring unit 115B determines whether "ACK" of the received LA-ECO frame is "1" or "0" (step S48). When "ACK" is "1", the LAG monitoring unit 115B terminates the process. When "ACK" is "0", the LAG monitoring unit 115B notifies the update unit 118B that is performing an updating process for the links of the reception of the LA-ECO frame where "Link Training" is "0" (step S49), and then the LAG monitoring unit 115B terminates the process.

FIG. 11 illustrates the flow of a link updating process performed by the aggregation controller 112B of the second network switching apparatus 2.

In the aggregation controller 112B, the update unit 118B instructs the power source controller 16B to supply power to the PHY modules of all the second ports 22 through the switch management unit 111B (step S51). In other words, the update unit 118B instructs the switch management unit 111B to request the power source controller 16B to supply power, and the switch management unit 111B sends the received request related to power supply to the power source controller 16B. Then, the power source controller 16B supplies power in accordance with the received request. Accordingly, power is supplied to the PHY modules of all the second ports 22.

Subsequently, the update unit 118B refers to the port state management table 113B to change the LED of the second port 22 where the state is "ECO auto-poweroff" to indicating "Link-down" (step S52). Further, the update unit 118B changes the state of the second port 22 where the state is "ECO auto-poweroff" to "Link state unknown" in the port state management table 113B (step S53).

After that, the update unit 118B raises the ECO processing execution flag of the LAG 5 from "0" to "1" in the LAG management table 114B (step S54).

After that, the update unit 118B transmits a frame that permits the execution of an updating process for links of the LAG 5 to the aggregation controller 112A of the first network switching apparatus 1 (step S55). The frame that permits the execution of an updating process for links of the LAG 5 is the received LA-ECO frame in which "ACK" is "1".

After that, the update unit 118B await the reception of an LA-ECO frame where "Link Training" is "0" from the aggregation controller 112A of the first network switching apparatus 1 (step S56). In reality, an LA-ECO frame where "Link Training" is "0" is detected in step S49 as described above.

When a timeout has occurred without receiving anything, the update unit 118B terminates the process. The timeout period is set in advance.

When an LA-ECO frame where "Link Training" is "0" is received, the update unit 118B extracts a link that is linked down by checking the state of the second ports 22 that belong to the LAG 5 (step S57).

After that, the update unit 118B changes the state of the linked-down second port 22 to "ECO auto-poweroff" in the port state management table 113B (step S58).

Further, the update unit 118B instructs the power source controller 16B to cut off the power supply to the PHY module of the linked-down second port 22 through the switch management unit 111B (step S59). In other words, the update unit 118B instructs the switch management unit 111B to request the power source controller 16B to cut off the power supply, and the switch management unit 111B sends the received request for the termination of power supply to the power source controller 16B. Then, the power source controller 16B cuts off the power supply in accordance with the received request. Accordingly, the power supply to the PHY module of the linked-down second port 22 is cut off.

After that, the update unit 118B changes the LED of the linked-down second port 22, i.e. , the LED of the second port 22 that has been deleted from link up, to indicating the ECO state (step S510). Further, the update unit 118B drops the ECO processing execution flag of the LAG 5 from "1" to "0" in the LAG management table 114B (step S511). Then, the update unit 118B changes the link-up operating time of the linked-down second port 22 to "0" in the port state management table 113B (step S512), and terminates the process.

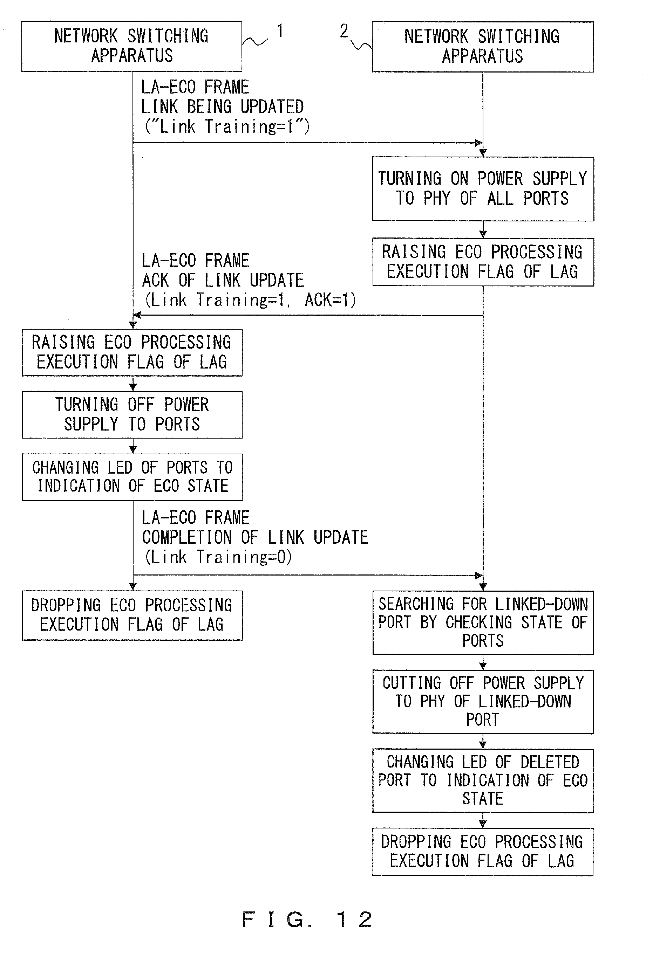

FIG. 12 is an explanatory schematic diagram of the link deleting process.

The first network switching apparatus 1 transmits an LA-ECO frame to the second network switching apparatus 2 prior to the linking down process. At this time, "Link Training" is set to "1" in the LA-ECO frame. As "Link Training" is "1" and "ACK" is "0", the LA-ECO frame is a link-down start notice.

When the second network switching apparatus 2 has received the LA-ECO frame as a link-down start notice, the power source of the second ports 22 is turned on, and the ECO processing execution flag of the LAG 5 is raised in accordance with the received LA-ECO frame.

After that, the second network switching apparatus 2 transmits the LA-ECO frame to the first network switching apparatus 1. At this time, "Link Training" and "ACK" are set to "1" in the LA-ECO frame. As "Link Training" and "ACK" are "1", this LA-ECO frame is a reply to the link-down start notice.

When the LA-ECO frame as a reply to the link-down start notice is received, the first network switching apparatus 1 performs a linking down process in accordance with the received LA-ECO frame.

In particular, the first network switching apparatus 1 raises the ECO processing execution flag of the LAG 5. Subsequently, the first network switching apparatus 1 cuts off the power supply to at least one of the first ports 12 from among the first ports 12 that belong to the LAG 5, according to the available bandwidth information of the LAG 5. By so doing, the first network switching apparatus 1 links down at least one of the first ports 12.

Further, the first network switching apparatus 1 excludes at least one of the first ports 12 in which the power supply is cut off according to the available bandwidth information from the target to which an error indicating link-down is sent. Accordingly, the first network switching apparatus 1 changes the LED 123 of at least one of the first ports 12 in which the power supply is cut off according to the available bandwidth information to indicating the ECO state.

After this linking down process, the first network switching apparatus 1 transmits the LA-ECO frame to the second network switching apparatus 2. At this time, "Link Training" is set to "0" in the LA-ECO frame. As "Link Training" and "ACK" are "0", this LA-ECO frame is a link-down completion notice.

After that, the first network switching apparatus 1 drops the ECO processing execution flag of the LAG 5.

When the link-down completion notice is received, the second network switching apparatus 2 checks the state of the second ports 22 that belong to the LAG 5 to extract at least one of the second ports 22 that is linked down according to the received link-down completion notice. Then, the second network switching apparatus 2 cuts off the power supply to at least one of the second ports 22 that is linked down due to the link-down of the first port 12. Accordingly, the power supply to the linked-down ports at both ends of a link is cut off.

Further, the second network switching apparatus 2 excludes at least one of the second ports 22 in which the power supply is cut off due to the link-down that corresponds to the link-down of the first port 12 from the target to which an error indicating link-down is sent. Accordingly, the second network switching apparatus 2 changes the LED of at least one of the second ports 22 in which the power supply is cut off due to the link-down that corresponds to the link-down of the first port 12 to indicating the ECO state.

After that, the second network switching apparatus 2 drops the ECO processing execution flag of the LAG 5.

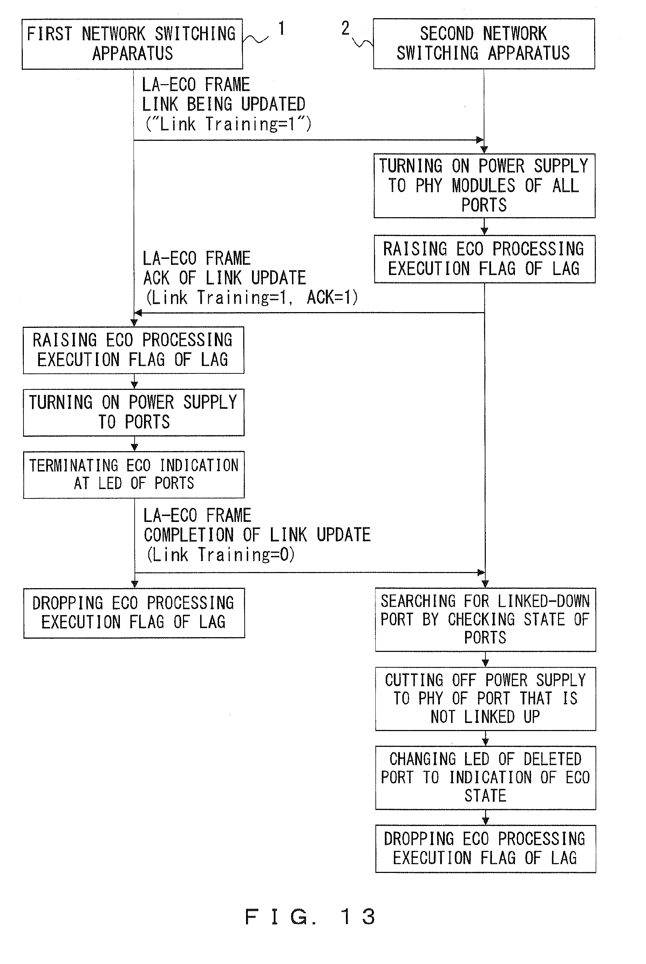

FIG. 13 is an explanatory schematic diagram of the link adding process.

The first network switching apparatus 1 transmits an LA-ECO frame to the second network switching apparatus 2 prior to the linking-up process. At this time, "Link Training" is set to "1" in the LA-ECO frame. As "Link Training" is "1" and "ACK" is "0", the LA-ECO frame is a link-up start notice.

When the second network switching apparatus 2 has received the LA-ECO frame as a link-up start notice, the power source of the second ports 22 is turned on, and the ECO processing execution flag of the LAG 5 is raised from "0" to "1" in accordance with the received LA-ECO frame.

After that, the second network switching apparatus 2 transmits the LA-ECO frame to the first network switching apparatus 1. At this time, "Link Training" and "ACK" are set to "1" in the LA-ECO frame. As "Link Training" and "ACK" are "1", this LA-ECO frame is a reply to the link-up start notice.

When the LA-ECO frame as a reply to the link-down start notice is received, the first network switching apparatus 1 performs a linking-up process in accordance with the received LA-ECO frame.

In particular, the first network switching apparatus 1 raises the ECO processing execution flag of the LAG 5. Subsequently, the first network switching apparatus 1 supplies power to at least one of the first ports 12 from among the first ports 12 that belong to the LAG 5, according to the available bandwidth information of the LAG 5. By so doing, the first network switching apparatus 1 links up at least one of the first ports 12.

Further, the first network switching apparatus 1 includes at least one of the first ports 12 to which power is supplied according to the available bandwidth information to the target to which an error indicating link-down is sent. Accordingly, the first network switching apparatus 1 changes the LED 123 of at least one of the first ports 12 to which power is supplied according to the available bandwidth information, from indicating the ECO state to indicating link up.

After this linking-up process, the first network switching apparatus 1 transmits the LA-ECO frame to the second network switching apparatus 2. At this time, "Link Training" is set to "0" in the LA-ECO frame. As "Link Training" and "ACK" are "0", this LA-ECO frame is a link-up completion notice.

After that, the first network switching apparatus 1 drops the ECO processing execution flag of the LAG 5 from "1" to "0".

When the link-up completion notice is received, the second network switching apparatus 2 checks the state of the second ports 22 that belong to the LAG 5 to extract the linked-down second port 22 according to the received link-up completion notice. Then, the second network switching apparatus 2 cuts off the power supply to the second port 22 that is linked down due to the link-down of the first port 12. Accordingly, the power supply to the linked-down ports at both ends of a link, excluding linked-up ports including a newly linked-up port, is cut off.

Further, the second network switching apparatus 2 excludes the second port 22 in which the power supply is cut off due to the link-down that corresponds to the link-down of the first port 12 from the target to which an error indicating link-down is sent. Accordingly, the second network switching apparatus 2 changes the LED of the second port 22 in which the power supply is cut off due to the link-down that corresponds to the link-down of the first port 12 to indicating the ECO state.

Subsequently, the second network switching apparatus 2 drops the ECO processing execution flag of the LAG 5 from "1" to "0".

### [List of Reference Signs]

- 1: first network switching apparatus
- 2: second network switching apparatus
- 3, 4: link
- 5: link aggregation group (LAG)
- 11, 21: link aggregation controller
- 12: first port
- 13: data switching unit
- 14: aggregator
- 15: transmission/reception controller
- 16: power source controller
- 17: monitoring unit
- 18: third port
- 22: second port
- 28: fourth port
- 111: switch management unit
- 112: aggregation controller
- 121: MAC unit
- 122: PHY module
- 123: LED
- 113: port state management table
- 114: LAG management table
- 115: LAG monitoring unit
- 116: deletion unit
- 117: addition unit
- 118: update unit

## Claims

1. A method for controlling a communication system that uses a plurality of links that connect a plurality of first ports of a first communication apparatus with a plurality of second ports of a second communication apparatus, as one virtual link that is a link aggregation group, to perform communication between the first communication apparatus and the second communication apparatus, the method comprising:
linking down, by using the first communication apparatus, at least one of the plurality of first ports by cutting off a power supply to the at least one of the plurality of first ports according to available bandwidth information of the link aggregation group;
transmitting, by using the first communication apparatus, a link-down completion notice to the second communication apparatus after the linking down; and
cutting off, by using the second communication apparatus that has received the link-down completion notice, a power supply to at least one of the plurality of second ports that is linked down.

2. The method according to claim 1, wherein
the first communication apparatus excludes the at least one of the first ports in which a power supply is cut off from a target to which an error indicating link-down is sent according to the available bandwidth information, and
the second communication apparatus excludes at least one of the second ports that is linked down due to a link-down of the at least one of the first ports in which a power supply is cut off from a target to which an error indicating link-down is sent according to the available bandwidth information.

3. The method according to claim 1, further comprising:
sending a link-down start notice, by using the first communication apparatus, to the second communication apparatus prior to the linking down; and
turning on, by using the second communication apparatus that has received the link-down start notice, a power source of the plurality of second ports, and sending a reply to the link-down start notice to the first communication apparatus.

4. The method according to claim 1, further comprising:
linking up, by using the first communication apparatus, the at least one of the plurality of first ports by turning on a power source of the at least one of the plurality of first ports according to available bandwidth information of a group in the communication system;
sending, by using the first communication apparatus, a link-up completion notice to the second communication apparatus after the linking up; and
cutting off, by using the second communication apparatus that has received the link-up completion notice, a power supply for a second port of the plurality of second ports that has been linked down.

5. The method according to claim 4, further comprising:
sending a link-up start notice, by using the first communication apparatus, to the second communication apparatus prior to the linking up; and
turning on, by using the second communication apparatus that has received the link-up start notice, a power source of the plurality of second ports, and sending a reply to the link-up start notice to the first communication apparatus.

6. The method according to claim 4, further comprising
calculating, by using the first communication apparatus, a desired number of links according to available bandwidth information of a group in the communication system, and comparing the desired number of links with a number of links that are currently linked up,
wherein
the first communication apparatus performs the linking down when the desired number of links is less than the number of links that are currently linked up, and performs the linking up when the desired number of links is greater than the number of links that are currently linked up, according to the comparing.

7. The method according to claim 1, further comprising
determining, by using the first communication apparatus, whether a period of link up of a link that is currently linked up exceeds a specified threshold according to available bandwidth information of a group in the communication system,
wherein
the first communication apparatus performs, after performing linking up, the linking down for a link in which the period of link up exceeds the threshold when there is the link in which the period of link up exceeds the threshold.

8. A communication system that uses a plurality of links that connect a plurality of first ports of a first communication apparatus with a plurality of second ports of a second communication apparatus, as one virtual link that is a link aggregation group, to perform communication between the first communication apparatus and the second communication apparatus, the communication system comprising:
the first communication apparatus configured to link-down at least one of the plurality of first ports by cutting off a power supply to the at least one of the plurality of first ports according to available bandwidth information of the link aggregation group, and to transmit a link-down completion notice to the second communication apparatus; and
the second communication apparatus, which has received the link-down completion notice, configured to cut off a power supply to at least one of the plurality of second ports that is linked down.

9. A communication apparatus that uses a plurality of links as one virtual link that is a link aggregation group to perform communication with another communication apparatus, the communication apparatus comprising:
a plurality of first ports that are connected to a plurality of second ports of the other communication apparatus through the plurality of links; and
a link aggregation controller configured to link-down at least one of the plurality of first ports by cutting off a power supply to the at least one of the plurality of first ports according to available bandwidth information of the link aggregation group, and to transmit a link-down completion notice to the other communication apparatus.

10. A communication apparatus that uses a plurality of links as one virtual link that is a link aggregation group to perform communication with another communication apparatus, the communication apparatus comprising:
a plurality of second ports that are connected to a plurality of first ports of the other communication apparatus through the plurality of links; and
a link aggregation controller configured to receive from the other communication apparatus a link-down completion notice that a power supply to at least one of the plurality of first ports has been cut off according to available bandwidth information of the link aggregation group and that the at least one of the plurality of first ports has been linked down, and to cut off a power supply to at least one of the plurality of second ports that is linked down.
